# EUROPÄISCHE PATENTSCHRIFT

(11) **EP 4 163 191 B1**
(45) Veröffentlichungstag und Bekanntmachung des Hinweises auf die Patenterteilung: **10.09.2025**
(21) Anmeldenummer: 21201618.2
(22) Anmeldetag: 08.10.2021
(51) Int. Cl.: B62D 25/00, B62D 29/00

(54) **SYSTEM EINES GEDÄMMTEN STRUKTURELEMENTES**
SYSTEM OF AN INSULATED STRUCTURAL ELEMENT
SYSTÈME D'ÉLÉMENT STRUCTURAL ISOLÉ

(43) Veröffentlichungstag der Anmeldung: 12.04.2023
(73) Patentinhaber: Sika Technology AG, 6340 Baar (CH)
(72) Erfinder: Ribot, Cendrine, 8953 Dietikon (CH); Lindgren, Henrik, 7181 Feluy (BE); Benouali, Hakim, 1170 Watermael-Boitsfort (BE)
(74) Vertreter: Sika Patent Attorneys

(56) Entgegenhaltungen:
- WO-A1-2005/105405
- WO-A1-2011/098395
- WO-A1-2012/078729
- US-A1- 2021 086 841

## Beschreibung

Die Erfindung betrifft ein System eines gedämmten Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

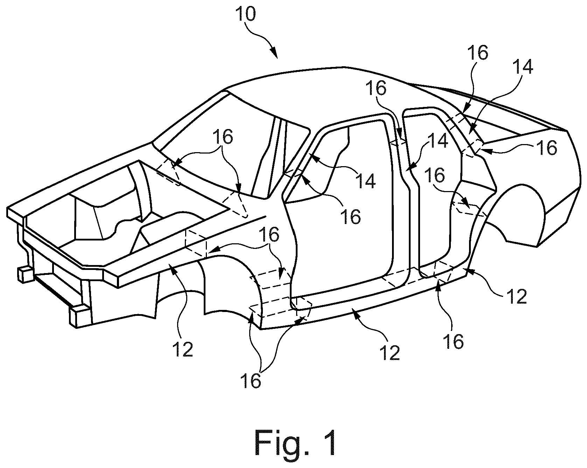

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Nachteilig an den bisher bekannten Abdichtungselementen ist es, dass diese spezifisch ausgelegt sind für Kraftfahrzeuge mit Verbrennungsmotoren. Dadurch ist eine Eignung solcher bekannter Abdichtungselemente für Kraftfahrzeuge mit alternativen Antrieben, insbesondere für elektrisch angetriebene Kraftfahrzeuge, nicht zwangsläufig gegeben. Ein gattungsgemäßes System eines gedämmten Strukturelements ist aus der US 2021/086841 A1 bekannt.

Es ist daher eine Aufgabe der vorliegenden Erfindung, Abdichtungslösungen zur Verfügung zu stellen, welche auch für Kraftfahrzeuge mit alternativen Antriebssystemen, insbesondere für elektrisch angetriebene Kraftfahrzeuge, gute Ergebnisse erzielen.

Diese Aufgabe wird zunächst gelöst durch ein System eines gedämmten Strukturelementes in einem Kraftfahrzeug, das System umfassend: ein Strukturelement, welches einen Hohlraum bildet und welches sich entlang einer Längsachse erstreckt; ein Dämmelement, welches zumindest einen Träger und ein expandiertes Material umfasst, wobei der Träger zumindest eine Wand umfasst, welche auf zumindest einer Seite vollständig mit expandiertem Material bedeckt ist; wobei das expandierte Material in Richtung der Längsachse eine minimale Dicke von zumindest 40 mm hat; und wobei das expandierte Material mit einer Expansionsrate von zumindest 3500% expandiert ist. Diese Lösung hat den Vorteil, dass dadurch insbesondere Kraftfahrzeuge mit alternativen Antriebssystemen, wie beispielsweise elektrisch angetriebene Fahrzeuge, zufriedenstellend akustisch gedämmt werden können. In Versuchen hat sich herausgestellt, dass eine solche Lösung mit einer dicken Schicht des expandierten Materiales eine deutlich bessere akustische Abdämmung von Strukturelementen erzielt, als dies bei der Verwendung eines herkömmlichen Dämmelementes der Fall war. Dieser Effekt ist besonders relevant bei Schallwellen mit höheren Frequenzen, welche insbesondere bei elektrisch angetriebenen Fahrzeugen auftreten.

Ein weiterer Vorteil der hier vorgeschlagenen Lösung besteht darin, dass dadurch eine vergleichbare akustische Abdämmung erzielt werden kann wie durch zweikomponentige Polyurethanschäume, dass aber durch die Verwendung von Bafflen eine deutlich vereinfachte Handhabung und Applikation des Dämmsystems gegeben ist. Das vorgeschlagene Dämmelement kann bereits vor einer Tauchlackierung der Karosserie im Strukturelement angebracht werden, wobei es nach der Lackierung im Einbrennofen expandiert wird. Bei zweikomponentigen Polyurethanschäumen ist eine Anwendung auch die Voraussetzung an die Ausrüstung deutlich komplexer und aufwendiger.

Zudem haben die zweikomponentigen Schäume den Nachteil, dass die auszuschäumenden Räume durch geeignete Blocker abgegrenzt werden müssen. Dies bedingt wiederum einen höheren Montage- und Arbeitsaufwand.

Die hier vorgeschlagene Lösung bietet insbesondere den Vorteil, dass durch das Verwenden einer dicken Schaumschicht eine besonders gute akustische Dämmleistung für Luftschallwellen in einem Frequenzbereich zwischen 500 und 3000 Hz erzielt werden kann. Da dieser Frequenzbereich insbesondere bei elektrisch betriebenen Kraftfahrzeugen gehäuft austritt, eignet sich die hier vorgeschlagene Lösung besonders für Anwendungen in Fahrzeugen mit alternativen Antriebssystemen.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Dämmung eines Strukturelementes. Diese verschiedenen Eigenschaften eines solchen Dämmelementes können dabei einzeln oder aber in Kombination miteinander auftreten.

Der Begriff "Expansionsrate" beschreibt im Zusammenhang dieser Erfindung den Anteil des ursprünglichen Volumens des expandierbaren Materiales, welcher durch den Expansionsvorgang hinzukommt.

Demnach wird bei einer Expansionsrate von 100% ein Volumen durch die Expansion verdoppelt (bestehendes Volumen plus 100% des bestehenden Volumens), bei einer Expansionsrate von 300% wird ein Volumen durch die Expansion vervierfacht (bestehendes Volumen plus 300% des bestehenden Volumens).

In einer beispielhaften Ausführungsform ist das System in einem elektrischen angetriebenen Kraftfahrzeug, insbesondere in einem Kraftfahrzeug ohne Verbrennungsmotor.

In einer beispielhaften Ausführungsform beträgt die Expansionsrate zumindest 4000%, insbesondere zumindest 4400%, insbesondere zumindest 4800%.

In einer beispielhaften Ausführungsform hat das expandierte Material eine minimale Dicke von zumindest 60 mm, bevorzugt von zumindest 80 mm, bevorzugt von zumindest 100 mm, bevorzugt von zumindest 120 mm.

In einer beispielhaften Ausführungsform umfasst der Träger neben der Wand zudem ein Befestigungselement.

In einer beispielhaften Ausführungsform ist das Befestigungselement als Clip oder als Push-Pin ausgebildet.

In einer beispielhaften Ausführungsform ist die Wand im Wesentlichen flach ausgebildet.

In einer beispielhaften Weiterbildung ist eine Ebene der Wand im Wesentlichen so ausgerichtet, dass die Längsachse des Strukturelementes senkrecht zu dieser Ebene liegt.

In einer alternativen Ausführungsform ist die Wand gewölbt oder gestuft ausgebildet.

In einer beispielhaften Weiterbildung bildet das expandierte Material die gewölbte oder gestufte Form der Wand auf einer der Wand abgewendeten Seite im Wesentlichen nach.

In einer beispielhaften Weiterbildung ist die Wölbung beziehungsweise Stufung der Wand und/oder des expandierten Materials derart angeordnet, dass zumindest eine Montageöffnung des Strukturelementes freibleibt von expandiertem Material.

Eine solche Anordnung des Dämmelementes im Strukturelement und eine solche Ausgestaltung des Dämmelementes hat den Vorteil, dass dadurch gezielt Montageöffnungen des Strukturelementes frei von expandiertem Material gehalten werden können. Oftmals ist es notwendig, solche Montageöffnungen offen zu halten, um beispielsweise Kabel und dergleichen hindurchführen zu können.

In einer beispielhaften Ausführungsform hat das Strukturelement zumindest eine Clipöffnung, wobei eine dem Hohlraum zugewandte Seite der Clipöffnung vom expandierten Material verschlossen bzw. zugeschäumt ist.

In einer beispielhaften Weiterbildung ist in der Clipöffnung ein weiteres Element von ausserhalb des Hohlraums am Strukturelement angebracht.

In einer beispielhaften Ausführungsform hat die Clipöffnung einen Durchmesser von höchstens 12 mm, insbesondere von höchstens 10 mm, insbesondere von höchstens 8 mm.

Ein Vorteil des hier vorgeschlagenen Systems liegt insbesondere darin, dass durch die sehr hohe Expansionsrate des expandierten Materials ein weicher Schaum gebildet wird. In Versuchen hat sich gezeigt, dass es möglich ist, Clips von ausserhalb des Strukturelementes in Clipöffnungen anzubringen, welche auf einer Innenseite des Strukturelementes mit dem Schaum verschlossen sind. Durch die Weichheit des Schaumes kann demnach der Clip den Schaum wegdrücken, so dass dieser eine Funktionalität solcher Clipöffnungen nicht einschränkt.

In einer beispielhaften Ausführungsform umfasst das Dämmelement weiterhin ein zusätzliches expandiertes Material, welches mit einer Expansionsrate von höchstens 3000% expandiert ist.

In einer beispielhaften Weiterbildung ist das zusätzliche expandierte Material mit einer Expansionsrate von höchstens 2500%, insbesondere höchstens 2000%, insbesondere höchstens 1800%, insbesondere höchstens 1500% expandiert.

In einer beispielhaften Weiterbildung ist das zusätzliche expandierte Material im Wesentlichen auf einer Aussenwand des Trägers, welche dem Strukturelement zugewandt ist, angeordnet, so dass das zusätzliche expandierte Material zusammen mit dem Träger einen Querschnitt des Strukturelementes verschliesst.

In einer beispielhaften Weiterbildung ist das zusätzliche expandierte Material derart ausgeführt, dass es bei einer Erhöhung einer Temperatur expandiert, bevor das expandierbare Material auf der Wand des Trägers expandiert.

Ein Vorteil einer Anwendung eines solchen zusätzlichen expandierten Materials ist darin zu sehen, dass dadurch ein Querschnitt des Strukturelementes bereits verschlossen werden kann, bevor das expandierbare Material vollständig expandiert ist. Dadurch kann eine Schäumung des expandierten Materials besser kontrolliert werden, insbesondere kann dadurch verhindert werden, dass das expandierte Material auf einer anderen Seite des Trägers schäumt. Zudem kann durch die Verwendung eines solchen zusätzlichen expandierten Materials eine akustische Dämmungswirkung und/oder eine abdichtende Wirkung, beispielsweise gegen Flüssigkeiten, weiter verbessert werden.

Als expandiertes Material beziehungsweise als expandierbares Material eignet sich insbesondere eine Zusammensetzung, wie sie in WO 2018/015461 A1 beschrieben ist. Solche Zusammensetzungen sind insbesondere dazu geeignet, hohe Expansionsraten zu erzielen. Dabei kann beispielsweise ein Anteil an Blähmittel erhöht werden beziehungsweise in einem höheren Bereich der angegebenen Bandbreite ausgewählt werden. Diese Zusammensetzungen können insbesondere besonders dicke und weiche Schäume beziehungsweise expandierte Materialien ausbilden.

Als zusätzliches expandierbares Material beziehungsweise als zusätzliches expandiertes Material können grundsätzlich verschiedene Materialien eingesetzt werden. Beispielsweise kann ein Material, welches unter dem Handelsnamen SikaBaffle^{®} 240, SikaBaffle^{®} 250 oder SikaBaffle^{®} 255 von der Sika Corp., USA, vertrieben wird, verwendet werden. Solche Materialien sind in den Patenten US 5,266,133 und US 5,373,027 beschrieben.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

In einer beispielhaften Ausführungsform ist das expandierte Material durch ein Zweikomponenten-Spritzgussverfahren zusammen mit dem Träger hergestellt.

In einer alternativen Ausführungsform ist das expandierte Material separat vom Träger hergestellt. Insbesondere ist dabei das expandierte Material durch ein Extrusionsverfahren oder ein Spritzgussverfahren hergestellt.

In einer beispielhaften Weiterbildung ist das expandierte Material an einem Trägerelement angeordnet. Insbesondere sind dabei das expandierte Material und das Trägerelement zusammen hergestellt, beispielsweise durch ein Extrusionsverfahren oder ein Spritzgussverfahren.

In einer bespielhaften Weiterbildung ist das expandierte Material am Träger fixiert, insbesondere durch eine Clip-Verbindung. Insbesondere ist dabei das Trägerelement, an welchem das expandierte Material angeordnet ist, am Träger fixiert.

Dabei ist dann das expandierte Material am Trägerelement angeordnet und bedeckt zugleich zumindest eine Seite der Wand des Trägers vollständig.

Eine solche separate Herstellung des expandierbaren Materiales (mit oder ohne zusätzlichem Trägerelement) hat den Vorteil, dass dadurch bereits bestehende Dämmelemente mit dem stark expandierenden Material nachgerüstet bzw. ergänzt werden können. Zudem können dabei standardisierte und in grossen Stückzahlen hergestellte separate expandierbare Materialien (mit oder ohne Trägerelement) verwendet werden, was sowohl Kostenvorteile als auch logistische Vorteile mit sich bringt.

Dadurch kann je nach Anforderung eine akustische Dämmungswirkung eines bereits bestehenden Dämmelementes stark verbessert werden, indem eine zumindest 40 mm dicke Schaumschicht (das expandierte Material) auf eine Wand des Trägers des bestehenden Dämmelementes angeordnet wird.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie; und
- Fig. 2a bis 5b: beispielhafte Darstellungen verschiedener Systeme gedämmter Strukturelemente.

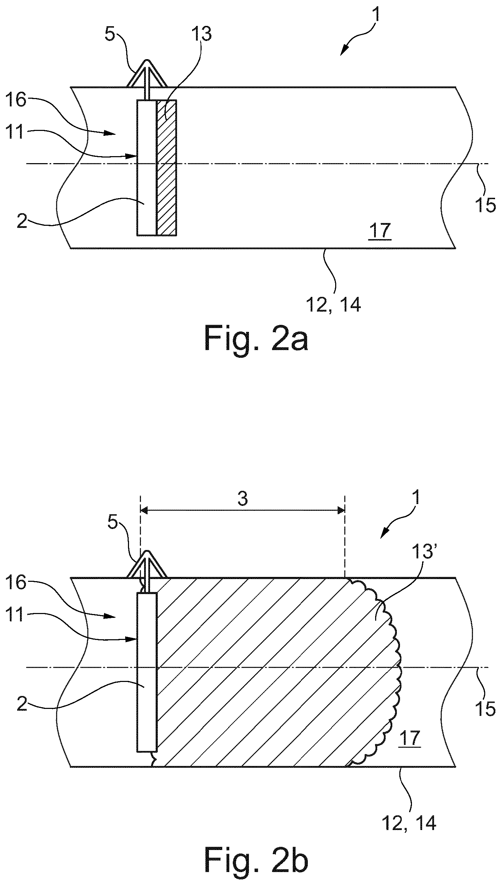

In den Fig. 2a bis 5b sind verschiedene Systeme 1 von gedämmten Strukturelementen 12, 14 in einem Kraftfahrzeug dargestellt. Dabei zeigen jeweils die Fig. 2a, 3a, 4a und 5a das System 1 mit einem Dämmelement 16, bei welchem das expandierbare Material 13 noch nicht expandiert ist, und die Fig. 2b, 3b, 4b und 5b zeigen jeweils dieselben Systeme 1 beziehungsweise Dämmelemente 16, bei denen das expandierbare Material 13 bereits expandiert ist und somit das expandierte Material 13' dargestellt ist.

Das Strukturelement 12, 14 weist jeweils einen Hohlraum 17 auf und erstreckt sich im Wesentlichen entlang der Längsachse 15.

In den Fig. 2a und 2b ist ein erstes Ausführungsbeispiel eines Systems 1 eines gedämmten Strukturelementes 12, 14 dargestellt. In diesem Ausführungsbeispiel hat das Dämmelement 16 einen Träger 11, welcher eine Wand 2 und ein Befestigungselement 5 umfasst. Auf dieser Wand 2 des Trägers 11 ist ein expandierbares Material 13 angeordnet. Nach einer Expansion bedeckt das expandierte Material 13' eine Seite der Wand 2 des Trägers 11 vollständig. Dabei hat das expandierte Material 13' eine minimale Dicke 3. Diese minimale Dicke 3 ist entlang der Längsachse 15 des Strukturelementes 12, 14 gemessen.

In diesem Ausführungsbeispiel ist die Wand 2 des Trägers 11 des Dämmelementes 16 im Wesentlichen flach ausgebildet.

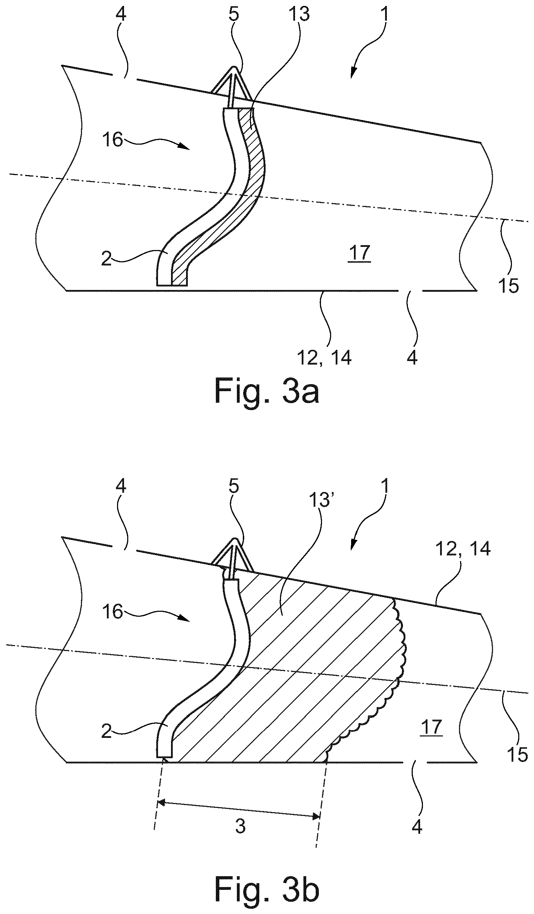

In den Fig. 3a und 3b ist ein weiteres Ausführungsbeispiel eines Systems 1 dargestellt. In diesem Ausführungsbeispiel hat die Wand 2 des Trägers 11 im Unterschied zum Ausführungsbeispiel gemäss den Fig. 2a und 2b eine gewölbte Form. Nach einer Expansion bildet das expandierte Material 13' diese gewölbte Form der Wand 2 auf einer der Wand 2 abgewandten Seite im Wesentlichen nach. Mit anderen Worten ist die Dicke 3 des expandierten Materials 13' entlang der Wand 2 in etwa konstant.

In diesem Ausführungsbeispiel wird die spezifische Form des Dämmelementes 16 dazu genutzt, dass Montageöffnungen 4 im Strukturelement 12, 14, welche sich in der Nähe des Dämmelementes 16 befinden, freibleiben beziehungsweise nicht zugeschäumt werden mit expandiertem Material 13'.

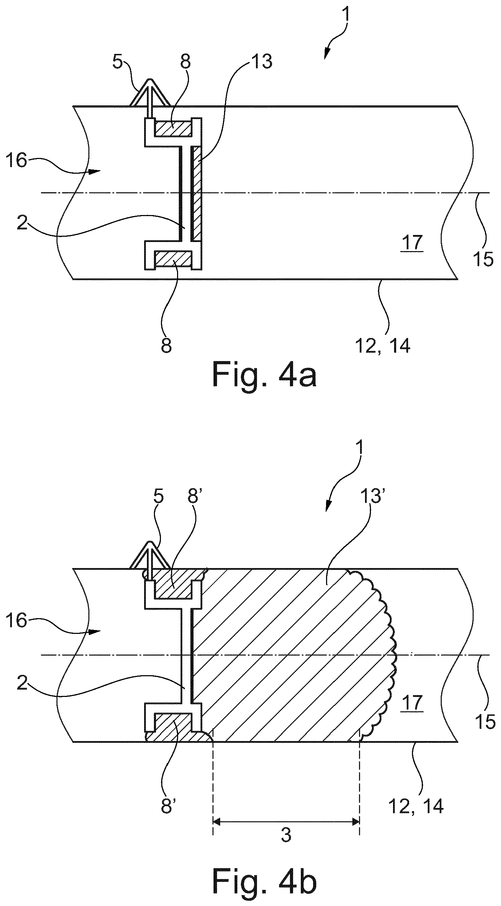

In den Fig. 4a und 4b ist ein weiteres Ausführungsbeispiel eines Systems 1 dargestellt. Im Unterschied zu den anderen Ausführungsbeispielen umfasst das Dämmelement 16 in diesem Ausführungsbeispiel zudem ein zusätzliches expandierbares Material 8 beziehungsweise ein zusätzliches expandiertes Material 8'. Dieses zusätzliche expandierbare Material 8 ist dabei im Wesentlichen auf Seitenwänden des Trägers 11 angeordnet, welche dem Strukturelement 12, 14 zugewandt sind. Durch diese Anordnung des zusätzlichen expandierbaren Materials 8 wird ein Querschnitt des Strukturelementes 12, 14 bereits durch den Träger 11 und das zusätzliche expandierte Material 8' verschlossen. Das expandierte Material 13' bildet dann einen dicken Schaum direkt angrenzend an den durch den Träger 11 und das zusätzliche expandierte Material 8 verschlossenen Querschnitt.

Durch die Verwendung eines solchen zusätzlichen expandierten Materials 8' kann eine Schäumung des expandierbaren Materials 13 zusätzlich besser gelenkt werden, und zudem können akustische Eigenschaften des Systems 1 weiterhin verbessert werden.

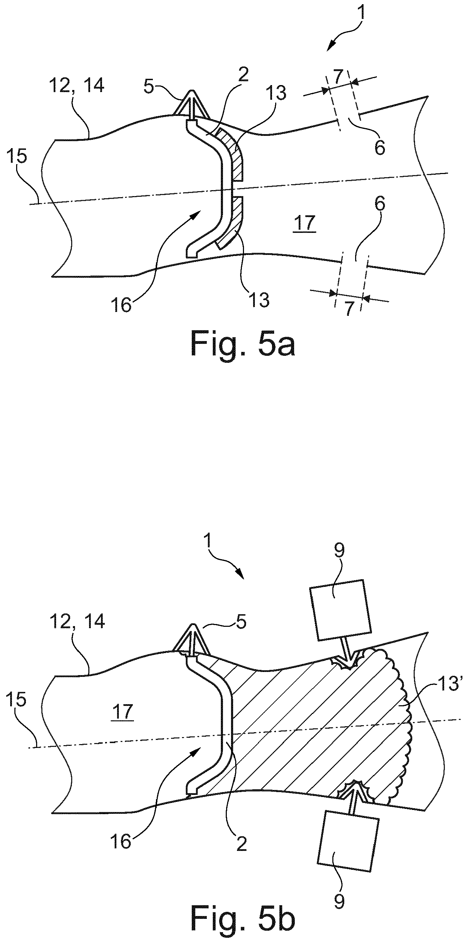

In den Fig. 5a und 5b ist schliesslich ein weiteres beispielhaftes System 1 dargestellt. In diesem Ausführungsbeispiel hat die Wand 2 des Trägers 11 des Dämmelementes 16 wiederum eine gewölbte Form. In diesem Ausführungsbeispiel bedeckt das expandierbare Material 13 eine Seite der Wand 2 nicht vollständig, jedoch bedeckt das expandierte Material 13' die Wand 2 des Trägers 11 auf einer Seite vollständig.

In diesem Ausführungsbeispiel ist das Dämmelement 16 in der Nähe von Clipöffnungen 6 des Strukturelementes 12, 14 angeordnet. Diese Clipöffnungen 6 haben jeweils einen Durchmesser 7. In diesem Ausführungsbeispiel werden die Clipöffnungen 6 auf einer Innenseite, das heisst auf einer Seite des Hohlraums 17, mit expandiertem Material 13 zugeschäumt beziehungsweise verschlossen. Weil das expandierte Material 13' durch seine sehr hohe Expansionsrate weich ausgebildet ist, können dennoch weitere Elemente 9 in den Clipöffnungen 6 angeordnet werden. Dabei verdrängen die Clips der Elemente 9 das expandierte Material 13' in einem Bereich unmittelbar hinter den Clipöffnungen 6.

### Bezugszeichenliste

- 1: System
- 2: Wand
- 3: minimale Dicke des expandierten Materials
- 4: Montageöffnung
- 5: Befestigungselement
- 6: Clipöffnung
- 7: Durchmesser der Clipöffnung
- 8: zusätzliches expandierbares Material
- 8': zusätzliches expandiertes Material
- 9: Element
- 10: Karosserie
- 11: Träger
- 12: Strukturelement
- 13: expandierbares Material
- 13': expandiertes Material
- 14: Strukturelement
- 15: Längsachse
- 16: Dämmelement
- 17: Hohlraum

## Patentansprüche

1. System (1) eines gedämmten Strukturelementes (12, 14) in einem Kraftfahrzeug, das System (1) umfassend:
ein Strukturelement (12, 14), welches einen Hohlraum (17) bildet und welches sich entlang einer Längsachse (15) erstreckt;
ein Dämmelement (16), welches zumindest einen Träger (11) und ein expandiertes Material (13') umfasst, wobei der Träger (11) zumindest eine Wand (2) umfasst, welche auf zumindest einer Seite vollständig mit expandiertem Material (13') bedeckt ist;
**dadurch gekennzeichnet, dass**
das expandierte Material (13') in Richtung der Längsachse (15) eine minimale Dicke (3) von zumindest 40 mm hat; und
wobei das expandierte Material (13') mit einer Expansionsrate von zumindest 3500% expandiert ist.

2. System (1) nach Anspruch 1, wobei das System (1) in einem elektrisch angetriebenen Kraftfahrzeug ist, insbesondere in einem Kraftfahrzeug ohne Verbrennungsmotor.

3. System (1) nach einem der vorhergehenden Ansprüche, wobei das expandierte Material (13') eine minimale Dicke (3) von zumindest 80 mm hat.

4. System (1) nach einem der vorhergehenden Ansprüche, wobei der Träger (11) neben der Wand (2) zudem ein Befestigungselement (5) umfasst.

5. System (1) nach Anspruch 4, wobei das Befestigungselement (5) als Clip oder als Push-Pin ausgebildet ist.

6. System (1) nach einem der vorhergehenden Ansprüche, wobei die Wand (2) im Wesentlichen flach ausgebildet ist.

7. System (1) nach Anspruch 6, wobei eine Ebene der Wand (2) im Wesentlichen so ausgerichtet ist, dass die Längsachse (15) des Strukturelementes (12, 14) senkrecht zu dieser Ebene liegt.

8. System (1) nach einem der Ansprüche 1 bis 5, wobei die Wand (2) gewölbt oder gestuft ausgebildet ist.

9. System (1) nach Anspruch 8, wobei das expandierte Material (13') die gewölbte oder gestufte Form der Wand (2) auf einer der Wand (2) abgewendeten Seite im Wesentlichen nachbildet.

10. System (1) nach einem der Ansprüche 8 oder 9, wobei die Wölbung beziehungsweise Stufung der Wand (2) und/oder des expandierten Materials (13') derart angeordnet ist, dass zumindest eine Montageöffnung (4) des Strukturelementes (12, 14) freibleibt von expandiertem Material (13').

11. System (1) nach einem der vorhergehenden Ansprüche, wobei das Strukturelement (12, 14) zumindest eine Clipöffnung (6) hat, wobei eine dem Hohlraum (17) zugewandte Seite der Clipöffnung (6) vom expandierten Material (13') verschlossen ist.

12. System (1) nach Anspruch 11, wobei in der Clipöffnung (6) ein weiteres Element (9) von ausserhalb des Hohlraums (17) am Strukturelement (12, 14) angebracht ist.

13. System (1) nach einem der Ansprüche 11 oder 12, wobei die Clipöffnung (6) einen Durchmesser (7) von höchstens 12 mm hat.

14. System (1) nach einem der vorhergehenden Ansprüche, wobei das Dämmelement (16) weiterhin ein zusätzliches expandiertes Material (8') umfasst, welches mit einer Expansionsrate von höchstens 3000% expandiert ist.

15. System (1) nach Anspruch 14, wobei das zusätzliche expandierte Material (8') im Wesentlichen auf einer Aussenwand des Trägers (11), welche dem Strukturelement (12, 14) zugewandt ist, angeordnet ist, so dass das zusätzliche expandierte Material (8') zusammen mit dem Träger (11) einen Querschnitt des Strukturelementes (12, 14) verschliesst.

## Claims

1. System (1) of an insulated structural element (12, 14) in a motor vehicle, the system (1) comprising:
a structural element (12, 14) which forms a cavity (17) and extends along a longitudinal axis (15);
an insulating element (16) comprising at least a substrate (11) and an expanded material (13'), the substrate (11) comprising at least one wall (2) completely covered by expanded material (13') on at least one side;
**characterized in that**
the expanded material (13') has a minimum thickness (3) of at least 40 mm in the direction of the longitudinal axis (15); and
the expanded material (13') being expanded with an expansion rate of at least 3500%.

2. System (1) according to Claim 1, wherein the system (1) is in an electrically propelled motor vehicle, in particular in a motor vehicle without an internal combustion engine.

3. System (1) according to either of the preceding claims, wherein the expanded material (13') has a minimum thickness (3) of at least 80 mm.

4. System (1) according to any of the preceding claims, wherein the substrate (11) additionally comprises, besides the wall (2), a fastening element (5).

5. System (1) according to Claim 4, wherein the fastening element (5) is in the form of a clip or a push pin.

6. System (1) according to any of the preceding claims, wherein the wall (2) is substantially flat.

7. System (1) according to Claim 6, wherein a plane of the wall (2) is aligned substantially such that the longitudinal axis (15) of the structural element (12, 14) is perpendicular to this plane.

8. System (1) according to any of Claims 1 to 5, wherein the wall (2) is curved or stepped.

9. System (1) according to Claim 8, wherein the expanded material (13') substantially reproduces the curved or stepped shape of the wall (2) on a side farther away from the wall (2).

10. System (1) according to either of Claims 8 and 9, wherein the curvature or stepped shape of the wall (2) and/or of the expanded material (13') is arranged such that at least one mounting opening (4) of the structural element (12, 14) remains free from expanded material (13').

11. System (1) according to any of the preceding claims, wherein the structural element (12, 14) has at least one clip opening (6), a side of the clip opening (6) that faces the cavity (17) being closed by expanded material (13').

12. System (1) according to Claim 11, wherein, in the clip opening (6), a further element (9) is mounted on the structural element (12, 14) from outside the cavity (17).

13. System (1) according to either of Claims 11 and 12, wherein the clip opening (6) has a diameter (7) of at most 12 mm.

14. System (1) according to any of the preceding claims, wherein the insulating element (16) also comprises an additional expanded material (8') expanded with an expansion rate of at most 3000%.

15. System (1) according to Claim 14, wherein the additional expanded material (8') is arranged substantially on an outer wall of the substrate (11) that faces the structural element (12, 14), with the result that the additional expanded material (8') together with the substrate (11) closes a cross section of the structural element (12, 14).

## Revendications

1. Système (1) d'un élément structurel (12, 14) isolé dans un véhicule automobile, le système (1) comprenant :
un élément structurel (12, 14), qui forme un espace creux (17) et qui s'étend le long d'un axe longitudinal (15) ;
un élément isolant (16), qui comprend au moins un support (11) et un matériau expansé (13'), le support (11) comprenant au moins une paroi (2) qui est entièrement recouverte sur au moins un côté de matériau expansé (13') ;
**caractérisé en ce que**
le matériau expansé (13') présente en direction de l'axe longitudinal (15) une épaisseur minimale (3) d'au moins 40 mm ; et
le matériau expansé (13') étant expansé à un taux d'expansion d'au moins 3500 %.

2. Système (1) selon la revendication 1, le système (1) étant dans un véhicule automobile à entraînement électrique, en particulier dans un véhicule automobile sans moteur à combustion interne.

3. Système (1) selon l'une des revendications précédentes, le matériau expansé (13') présentant une épaisseur minimale (3) d'au moins 80 mm.

4. Système (1) selon l'une des revendications précédentes, le support (11) comprenant en outre un élément de fixation (5) en plus de la paroi (2).

5. Système (1) selon la revendication 4, l'élément de fixation (5) étant réalisé comme un clip ou comme un bouton-poussoir.

6. Système (1) selon l'une des revendications précédentes, la paroi (2) étant réalisée de manière sensiblement plate.

7. Système (1) selon la revendication 6, un plan de la paroi (2) étant orienté sensiblement de telle sorte que l'axe longitudinal (15) de l'élément structurel (12, 14) est perpendiculaire audit plan.

8. Système (1) selon l'une des revendications 1 à 5, la paroi (2) étant réalisée de manière bombée ou étagée.

9. Système (1) selon la revendication 8, le matériau expansé (13') reproduisant sensiblement la forme bombée ou étagée de la paroi (2) sur un côté opposé à la paroi (2).

10. Système (1) selon l'une des revendications 8 ou 9, le bombement ou l'étagement de la paroi (2) et/ou du matériau expansé (13') étant disposé de telle manière qu'au moins une ouverture de montage (4) de l'élément structurel (12, 14) reste dépourvue de matériau expansé (13').

11. Système (1) selon l'une des revendications précédentes, l'élément structurel (12, 14) présentant au moins une ouverture (6) de clip, un côté de l'ouverture (6) de clip tourné vers l'espace creux (17) étant fermé par le matériau expansé (13').

12. Système (1) selon la revendication 11, un autre élément (9) étant installé sur l'élément structurel (12, 14) depuis l'extérieur de l'espace creux (17) dans l'ouverture (6) de clip.

13. Système (1) selon l'une des revendications 11 ou 12, l'ouverture (6) de clip présentant un diamètre (7) de 12 mm au maximum.

14. Système (1) selon l'une des revendications précédentes, l'élément isolant (16) comprenant par ailleurs un matériau expansé supplémentaire (8'), lequel est expansé à un taux d'expansion de 3000 % au maximum.

15. Système (1) selon la revendication 14, le matériau expansé supplémentaire (8') étant disposé sensiblement sur une paroi extérieure du support (11), laquelle est tournée vers l'élément structurel (12, 14) de telle sorte que le matériau expansé supplémentaire (8') ferme conjointement avec le support (11) une section transversale de l'élément structurel (12, 14).
